# EUROPÄISCHE PATENTSCHRIFT

(11) **EP 1 388 227 B1**
(45) Veröffentlichungstag und Bekanntmachung des Hinweises auf die Patenterteilung: **06.07.2005**
(21) Anmeldenummer: 02738016.1
(22) Anmeldetag: 30.04.2002
(51) Int. Cl.: H04B 17/00

(54) **SIGNALGENERATOR MIT ANZEIGEEINRICHTUNG**
SIGNAL GENERATOR WITH DISPLAY UNIT
GENERATEUR DE SIGNAUX A AFFICHAGE

(30) Priorität: 18.05.2001 DE 10124371; 27.06.2001 DE 10130943
(43) Veröffentlichungstag der Anmeldung: 11.02.2004
(73) Patentinhaber: Rohde & Schwarz GmbH & Co. KG, 81671 München (DE)
(72) Erfinder: PAULY, Andreas, 81673 München (DE); BRAUNSTORFINGER, Thomas, 80796 München (DE)
(74) Vertreter: Körfer, Thomas, Dipl.-Phys.
(86) Internationale Anmeldenummer: PCT/EP2002/004763
(87) Internationale Veröffentlichungsnummer: WO 2002/095994

(56) Entgegenhaltungen:
- EP-A- 0 845 885
- WO-A-01/06685
- US-A- 5 539 772
- KLIER J: "SIGNAL GENERATOR SMIQ04B UND SMIQ06B: I/Q-MODULATION JETZT BIS 6.4 GHZ" NEUES VON ROHDE & SCHWARZ, Nr. 163, 1999, Seiten 8-10, XP002212413
- KERNCHEN W: "SIGNAL GENERATOR SMIQ: MIT NEUEN OPTIONEN BEREIT FÜR 3G" NEUES VON ROHDE & SCHWARZ, Nr. 166, 2000, Seiten 10-12, XP002212291

## Beschreibung

Die Erfindung betrifft einen Signalgenerator zur Erzeugung eines digital modulierten Hochfrequenzsignals, beispielsweise eines Mobilfunksignals nach dem GSM (Global System for Mobile Communications)-Standard oder einem W-CDMA (Wideband Code Division Multiple Access)-Standard.

Bisher übliche Signalgeneratoren verfügen in der Regel nicht über eine Anzeige des aktuell erzeugten Basisbandsignals. Allenfalls ist eine statische Anzeige des theoretisch erzeugten Signals, nicht jedoch des tatsächlich aktuell erzeugten Signals, vorhanden. Die Beobachtung der Änderung des Signals in Abhängigkeit von der Zeit oder eine Signalauswertung des tatsächlich aktuell erzeugten Basisbandsignals ist nicht möglich.

Die Druckschrift KLIER J.: "SIGNAL GENERATOR SMIQ04B UND SMIQ06B: I/Q-MODULATION JETZT BIS 6.4 GHZ" in NEUES VON ROHDE & SCHWARZ, Nr. 163, 1999, Seiten 8-10, offenbart einen Signalgenerator mit einer Basisbandeinheit (Datengenerator, Modulationscoder), die ein digitales Basisbandsignal erzeugt, und einem I/Q-Modulator, der das digitale Basisbandsignal moduliert.

Aus der Druckschrift KERNCHEN W.: "SIGNAL GENERATOR SMIQ: MIT NEUEN OPTIONEN BEREIT FÜR 3G" in NEUES VON ROHDE & SCHWARZ, Nr. 166, Mai 2000 (2000-05), Seiten 10-12, die eine Weiterentwicklung des Signalgenerators beschreibt, ist es bekannt, zur Vermeidung von Fehleingaben eine Anzeigevorrichtung vorzusehen, auf der die grafische Anzeige des Constellation-Diagramms, der CCDF und des belegten Coderaums möglich ist. Beide Druckschriften offenbaren jedoch keinen Aufzeichnungsspeicher, der einen Zeitabschnitt des digitalen Basisbandsignals aufzeichnet.

Der Erfindung liegt deshalb die Aufgabe zugrunde, einen Signalgenerator zu schaffen, mit welchem eine Darstellung des aktuell erzeugten Basisbandsignals möglich ist.

Die Aufgabe wird durch die Merkmale des Anspruchs 1 gelöst.

Erfindungsgemäß ist ein Aufzeichnungsspeicher vorgesehen, der einen Zeitabschnitt in Art einer Momentanaufnahme (Snap Shot) des Basisbandsignals aufzeichnet. Das so aufgezeichnete Basisbandsignal kann ggf. nach entsprechender Signalaufbereitung in einer vorgebbaren Darstellungsweise, beispielsweise als Konstellationsdiagramm, Spektrum, Code-Domain-Power-Darstellung oder als CCDF (Complementary Cumulative Distribution Function)-Darstellung angezeigt werden. Somit ist eine "Pseudo-Echtzeit"-Anzeige geschaffen.

Die Unteransprüche betreffen vorteilhafte Weiterbildungen der Erfindung.

Mit der erfindungsgemäßen Anzeigeeinrichtung kann die Signalveränderung beobachtet werden, die das Basisbandsignal beispielsweise in einer Rauscheinheit, einer Fadingeinheit oder einer Verzerrereinheit erfährt. Auch kann die Signalaufbereitung in der Basisbandeinheit kontrolliert werden, indem das Signal beispielsweise vor und nach einem Impulsformungsfilter oder vor und nach einem Abtastratenumsetzer (Resampler) beobachtet wird. Zur Anzeige der Code Domain Power eines CDMA-Signals ist es vorteilhaft, dem Aufzeichnungsspeicher das Signal auf der Symboltaktebene vor dem Impulsformungsfilter zuzuführen, da dabei die maximale Speichertiefe ausgenützt wird und keine Symboltaktregenerierung notwendig ist.

Es ist vorteilhaft, daß eine Dezimierungseinheit zur Verfügung steht, die den Datenstrom des digitalen Basissignals um einen vorgebbaren Dezimierungsfaktor dezimiert. Somit kann das Basisbandsignal beispielsweise auf einer dezimierten Systemtaktebene beobachtet werden und der Dezimierungsfaktor kann an das zu beobachtende Signal, beispielsweise die Symbollänge oder Slot-Länge, optimal angepaßt werden.

Es gibt Anwendungen, bei welchen das Signal ungetriggert in den Aufzeichnungsspeicher eingespeichert werden kann. Für eine Reihe von Anwendungen ist jedoch eine Triggerung sinnvoll, beispielsweise dann, wenn die Speichertiefe kleiner ist als der gewünschte Beobachtungszeitraum oder wenn das Basisbandsignal periodisch, beispielsweise frameperiodisch ist und periodische Abschnitte des Signals für eine bestimmte Auswertung kombiniert werden sollen.

Die Erfindung wird nachfolgend unter Bezugnahme auf die Zeichnung näher beschrieben. In der Zeichnung zeigt:
- Fig. 1: ein Blockschaltbild eines Ausführungsbeispiels des erfindungsgemäßen Signalgenerators;

- Fig. 2: ein Beispiel eines auf der Anzeigeeinrichtung des erfindungsgemäßen Signalgenerators angezeigten Konstellationsdiagramms eines QPSK-Signals;
- Fig. 3: ein Beispiel eines auf der Anzeigeeinrichtung des erfindungsgemäßen Signalgenerators angezeigten Konstellationsdiagramms eines W-CDMA-Signals; und
- Fig. 4: ein Beispiel einer CCDF (Complementary Comulative Distribution Function)-Darstellung auf der Anzeigeeinrichtung des erfindungsgemäßen Signalgenerators.

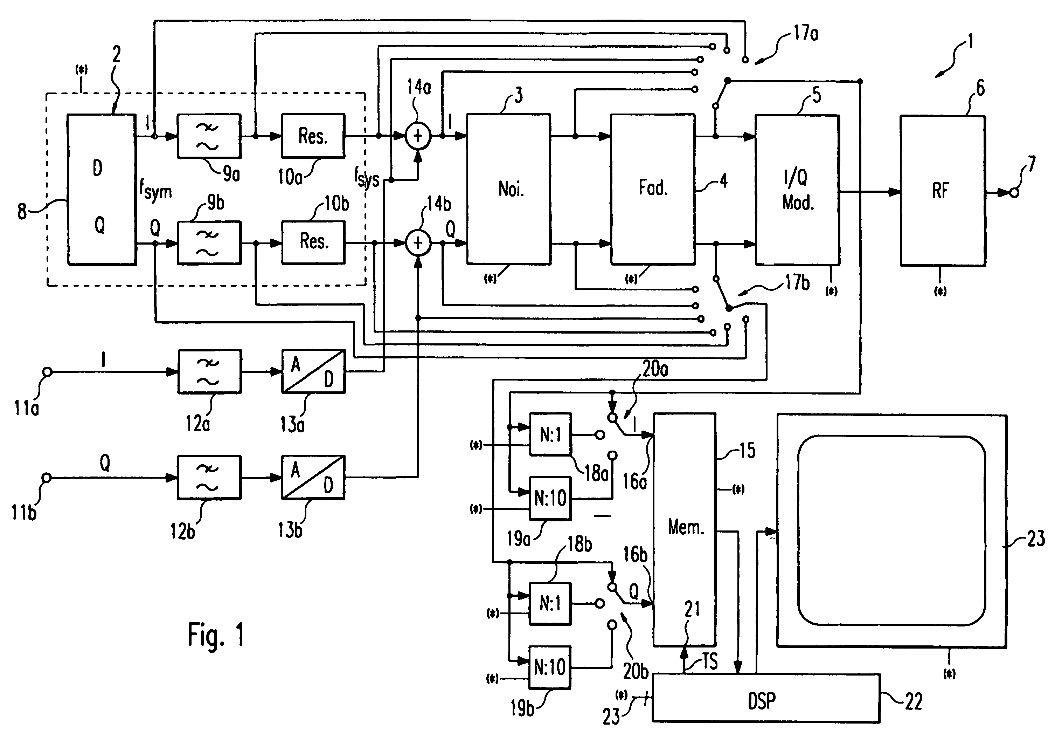

Fig. 1 zeigt ein Blockschaltbild des erfindungsgemäßen Signalgenerators 1. Der Signalgenerator 1 dient zur Erzeugung eines digital modulierten Hochfrequenzsignals, beispielsweise eines digital modulierten Mobilfunksignals nach dem GSM-Standard, den GSM-EDGE-Standard oder einem W-CDMA-Standard für die 3. Generation Mobilfunk (UMTS).

Eine Basisbandeinheit erzeugt ein Basisbandsignal mit einer I (Inphase)-Komponente und einer Q (Quadraturphase)-Komponente. Das von der Basisbandeinheit 2 erzeugte digitale Basisbandsignal kann über mehrere Signalveränderungseinheiten, beispielsweise eine Rauscheinheit 3, die das Basisbandsignal mit einem Rauschen beaufschlagt, und eine Fadingeinheit 4, die das Basisbandsignal mit einem Fading (variablem Schwund) oder einer Verzerrung beaufschlagt, einem I/Q-Modulator 5 zugeführt werden. Zwischen der Basisbandeinheit 2 und dem I/Q-Modulator 5 ist jeweils ein Signalpfad für die I-Komponente und ein Signalpfad für die Q-Komponente vorhanden. Der I/Q-Modulator 5 moduliert das digitale Basisbandsignal in ein analoges Signal, das von der Hochfrequenzeinheit 6 in das entsprechende Hochfrequenzband umgesetzt wird. An einem Ausgang 7 des Signalgenerators 1 steht das digital modulierte Hochfrequenzsignal zur Verfügung.

Die Basisbandeinheit 2 weist eine Datenquelle 8 auf, welche mit einem Symboltakt f_{sym} Datensymbole bestehend aus einer I-Komponente und einer Q-Komponente erzeugt. Für die I-Komponente und Q-Komponente ist jeweils ein Impulsformungsfilter 9a bzw. 9b vorgesehen. Die Impulsformungsfilter 9a und 9b haben beispielsweise Tiefpaßcharakteristik und formen die Impulse am Ausgang der Datenquelle 8 in eine für die Übertragung günstige Impulsform um. In jeweils einem Abtastratenumsetzer (Resampler) für die I-Komponente und Q-Komponente 10a bzw. 10b wird die Abtastrate auf die Systemtaktrate f_{sys} erhöht. Die Systemtaktrate f_{sys} kann beispielsweise 80 MHz betragen.

Es kann ein Eingang 11a für die I-Komponente eines extern zuführbaren Signals und Eingang 11b für die Q-Komponente eines extern zuführbaren analogen Signals vorhanden sein. Dieses externe analoge Signal erfährt in jeweils einem Tiefpaß 12a bzw. 12b eine Bandbegrenzung und wird an Analog/Digital-Wandlern 13a bzw. 13b jeweils in eine digitale I-Komponente bzw. digitale Q-Komponente umgesetzt. Diese externe I-Komponente kann an einem Addierer 14a zu der I-Ausgangskomponente der Basisbandeinheit 2 addiert werden, während die externe Q-Komponente an einem Addierer 14b zu der Q-Ausgangskomponente der digitalen Basiseinheit 2 addiert werden kann.

Erfindungsgemäß ist ein Aufzeichnungsspeicher 15 vorhanden, mit welchem jeweils ein Zeitabschnitt des digitalen Basisbandsignals aufgezeichnet werden kann. Dazu ist ein I-Eingang 16a des Aufzeichnungsspeichers 15 über eine erste Umschalteinrichtung 17a und ein Q-Eingang 16b des Aufzeichnungsspeichers 15 über eine zweite Umschalteinrichtung 17b mit mehreren Positionen in dem Signalpfad der I-Komponente bzw. der Q-Komponente verbindbar. Im dargestellten Ausführungsbeispiel befindet sich ein Signalabgriff am Ausgang der Datenquelle 8, ein Signalabgriff am Ausgang des Impulsformungsfilters 9a bzw. 9b, ein Signalabgriff an den Eingängen des Addierers 14a bzw. 14b, ein Signalabgriff an dem Ausgang des Addierers 14a bzw. 14b, ein Signalabgriff an dem Ausgang der Rauscheinheit 3 und ein weiterer Signalabgriff am Ausgang der Fadingeinheit 4 bzw. am Eingang des I/Q-Modulators 5.

Vorzugsweise befinden sich am Eingang des Aufzeichnungsspeichers 15 eine oder mehrere Dezimierungseinheiten 18a bzw. 18b und 19a bzw. 19b. Während die Dezimierungseinheiten 18a und 18b den Datenstrom des digitalen Basisbandsignals um einen Dezimierungsfaktor N dezimieren, wird durch die Dezimierungseinheit 19a und 19b der Datenstrom jeweils um einen beispielsweise um den Faktor 10 kleineren Dezimierungsfaktor N:10 dezimiert, wobei der Dezimierungsfaktor N frei wählbar ist. Über eine dritte Umschalteinrichtung 20a ist der I-Eingang 16a entweder direkt mit dem Ausgang der ersten Umschalteinrichtung 17a oder mit dem Ausgang einer der Dezimierungseinheiten 18a und 19a verbindbar. Entsprechend ist der Q-Eingang 16b des Aufzeichnungsspeichers 15 entweder direkt mit einem Ausgang der zweiten Umschalteinrichtung 17b oder mit einem Ausgang einer der Dezimierungseinheiten 18b und 19b verbindbar.

Der Beginn des Zeitabschnitts, welchen der Aufzeichnungsspeicher 15 aufzeichnet, kann durch ein Triggersignal TS, welches einem Triggereingang 21 des Aufzeichnungsspeichers 15 zugeführt wird, gesteuert werden. Das Triggersignal TS wird beispielsweise durch einen digitalen Signalprozessor 22 erzeugt, der über einen Steuerbus 23 auch mit der digitalen Basisbandeinheit 2, der Rauscheinheit 3, der Fadingeinheit 4, dem I/Q-Modulator 5, der Hochfrequenzeinheit 6 und den Dezimierungseinheiten 18a, 19a, 18b und 19b in Verbindung steht. Die Verbindung des Steuerbusses 23 ist (*) gekennzeichnet. Der digitale Signalprozessor 22 steuert die gesamte Signalaufbereitung und ist somit in der Lage, das Triggersignal TS zeitlich synchron zu dem Basisbandsignal an dem entsprechenden Signalabgriff zu erzeugen.

Ferner ist eine Anzeigeeinrichtung 23 vorhanden, mit welcher das in dem Aufzeichnungsspeicher 15 gespeicherte digitale Basisbandsignal ggf. nach einer entsprechenden Darstellungsaufbereitung in dem digitalen Signalprozessor 22 in einer vorgebbaren Darstellungsweise darstellbar ist. Bei der Anzeigeeinrichtung 23 handelt es sich beispielsweise um ein Display. Der erfindungsgemäße Aufzeichnungsspeicher 15 ermöglicht in Verbindung mit der erfindungsgemäßen Anzeigeeinrichtung 23 eine "Pseudo-Echtzeit"-Signalanzeige und eine Signalanalyse im Signalgenerator 1 beispielsweise zur Darstellung einer Complementary Cumulative Distribution Function CCDF, eines Konstellationsdiagramms, des I-Signals und Q-Signals im Zeitverlauf, des Spektrums oder eine Code-Domain-Power-Darstellung. Zu der Code-Domain-Power-Darstellung im allgemeinen, nicht jedoch bei einem Signalgenerator, wird auf die DE 100 56 258 A1 der gleichen Anmelderin verwiesen.

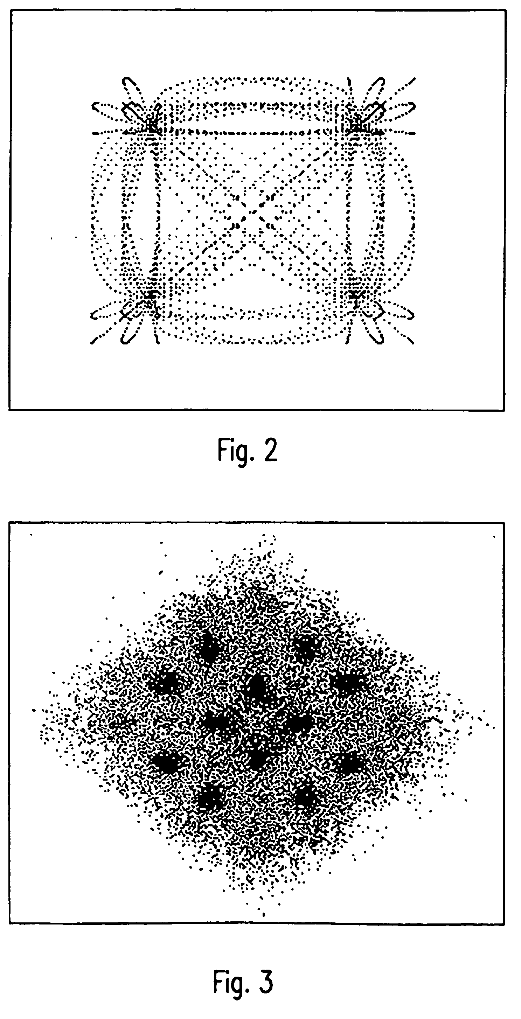

Fig. 2 zeigt ein Beispiel einer Darstellung eines Konstellationsdiagramms für ein QPSK-Signal. Erkennbar sind die vier Zustandspunkte in der I/Q-Ebene und die Übergänge beim Zustandswechsel. Fig. 3 zeigt ein Beispiel mehrerer sich überlagernder W-CDMA-Signale im Konstellationsdiagramm.

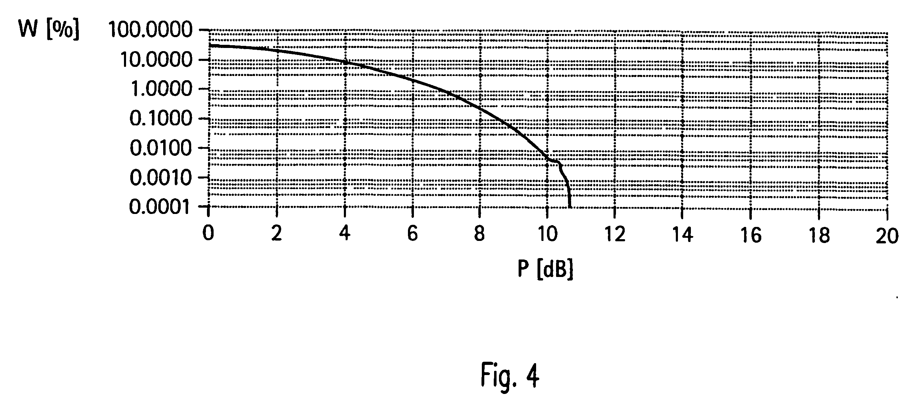

Fig. 4 zeigt eine CCDF-Darstellung. Die "Complementary Cumulative Distribution Funktion" (CCDF) gibt an, mit welcher Häufigkeit W die Beiträge der komplexen Abtastwerte einen bestimmten vorgegebenen Betrag, z. B. die mittlere Leistung, übersteigen. Wird der Grenzbetrag als Radius eines Kreises um den Ursprung interpretiert, so wird nach rechts der Radius angetragen und nach oben die Häufigkeit der Abtastwerte, die außerhalb dieses Kreises liegen.

Der Aufzeichnungsspeicher 15 ermöglicht gewissermaßen einen "Schnappschuß" des Signals, also eine Aufzeichnung des Signals in einem begrenzten Zeitabschnitt. Nachdem das Signal in dem Aufzeichnungsspeicher 15 aufgezeichnet wurde, wird der Aufzeichnungsspeicher 15 im Ausführungsbeispiel durch den digitalen Signalprozessor 22 ausgelesen und es kann sofort mit der nächsten Signalaufzeichnung begonnen werden. Die aufgezeichneten Signale werden entweder direkt an der optischen Anzeigeeinrichtung 23 dargestellt oder nach in dem digitalen Signalprozessor 22 vorzunehmenden Analyse- und vorverarbeitungsschritten auf der Anzeigeeinrichtung 23 entsprechend graphisch dargestellt. Auch die Anzeige von über die Eingänge 11a und 11b zugeführten externen Signalen ist möglich. Damit kann beispielsweise überprüft werden, ob das eingespeiste Signal das erwartete Verhalten zeigt oder der Meßaufbau korrekt verkabelt ist.

Da nicht ein idealisiertes, theoretisch berechnetes Signal, sondern das tatsächlich gemessene Signal dargestellt wird, sind alle Effekte der Basisbandsignalerzeugung, beispielsweise die Bit-Auflösung der digitalen Komponenten, Einschwingvorgänge und die Wirkung der analogen Bandbegrenzungsfilter 12a und 12b, zu erkennen und eine Bewertung der Signalqualität ist möglich. Bei der Verwendung des Ausgangssignals des Signalgenerators 1 als Stimulus für ein Testobjekt kann somit bereits im Signalgenerator 1 untersucht werden, welche Signalfehler das Ausgangssignal des Signalgenerators 1 hat. Damit wird die Bewertung der Signalbeeinflussung durch das Testobjekt erleichtert.

Weiterhin sind Auswirkungen von Parameteränderungen der Einstellung des Signalgenerators 1, beispielsweise Änderungen der Modulationsart, der Rauschamplitude oder des Fadings, direkt an der Anzeigeeinrichtung 23 erkennbar. Auch die Überwachung externer Schnittstellen ist möglich. Bei den immer komplexer werdenden digitalen Übertragungssystemen beispielsweise der 3. Generation Mobilfunk (UMTS) ermöglicht die Signalanzeige in "Pseudo-Echtzeit" die Überprüfung der eingestellten Parameter und macht damit bei steigernder Komplexität die Bedienung erst sinnvoll möglich. Beispielsweise ist die Auswirkung von Begrenzungseffekten (Clipping) oder des Zuschaltens einer zweiten Basis- oder Mobilstation auf die Code Domain eines CDMA-Signals des an der Anzeigeeinrichtung 23 angezeigten Signals möglich und erleichtert die Auswahl der betroffenen Parameter.

Abhängig von der Darstellungsform und abhängig davon, ob das Signal intern oder extern erzeugt worden ist, ist ein Signalabgriff an unterschiedlichen Stellen sinnvoll. Ein Abgriff auf der Ebene des Symboltakts f_{sym} vor den Impulsformungsfiltern 9a, 9b ist z. B. für eine Code-Domain-Power-Darstellung sinnvoll, da die maximale Speichertiefe ausgenutzt wird und keine Symboltaktregenerierung notwendig ist. Ein Abgriff auf der Ebene des Systemtakts f_{sys} ermöglicht eine maximale Zeitauflösung der internen und externen Signale. Auf der Ebene eines durch die Dezimiereinheiten 18a, 19a, 18b, 19b dezimierten Systemtakts f_{sys}/N (beispielsweise Herabsetzung des Systemtakts von 80 MHz auf einen dezimierten Systemtakt von 40, 20, 10 oder 5 MHz) ist eine optimale Anpassung der Darstellung an interne und externe Signale möglich. Der Dezimierungsfaktor N kann entweder automatisch, beispielsweise angepaßt an die Signalbandbreite, eingestellt werden oder kann manuell vorgegeben werden, um das Signal in verschiedenen Vergrößerungsstufen (Zoom Stufen) zu betrachten und auszuwerten.

Für bestimmte Darstellungsformen ist es notwendig, daß der vom den Aufzeichnungsspeicher 15 erfaßte Zeitabschnitt eine bestimmte Länge hat, da das Zusammenfassung mittlerer und kurzer Signalabschnitte nicht in einfacher Weise möglich ist. Für die Darstellung von Spektren und eine zeitabhängige Signaldarstellung hängt diese Mindestlänge von der gewünschten Auflösung ab. Für eine Code-Domain-Power-Darstellung ist es sinnvoll, mindestens zwei Symbole maximaler Länge aufzeichnen zu können, da die Bestimmung der Kanalleistung eines Code-Kanals mindestens ein komplettes Symbol voraussetzt. Wenn der von dem Aufzeichnungsspeicher 15 erfaßte Zeitabschnitt mindestens zwei Symbole erfaßt, ist gewährleistet, daß auch bei einer ungetriggerten Messung ein komplettes Symbol in dem erfaßten Zeitabschnitt enthalten ist.

Es ist auch möglich, mehrere Signalabschnitte aus mehreren hintereinander erfaßten Zeitabschnitten zu kombinieren. Bei einigen Darstellungsformen ist die Zusammenfassung von Teilabschnitten des Basisbandsignals ohne Triggerung möglich. Dies gilt beispielsweise für die in Fig. 4 dargestellte CCDF-Darstellung, ein gemitteltes Spektrum oder das in den Figuren 2 und 3 dargestellte Konstellationsdiagramm.

Wenn der zu analysierende Signalabschnitt länger als der von dem Aufzeichnungsspeicher 15 maximal erfaßbare Zeitabschnitt ist, können durch geeignete Wahl des Triggersignals TS mehrere Zeitabschnitte lückenlos aneinander gefügt werden. Dies ermöglicht eine Analyse längerer Signalabschnitte auch bei begrenzter Speichertiefe des Aufzeichnungsspeichers 15. Bei einem frameperiodischen, sich in mehrere Zeitschlitze (Slots) gliedernden W-CDMA-Signal, können die einzelnen Zeitschlitze (Slots) eines Rahmens (Frame) nacheinander aufgezeichnet werden, wenn der Aufzeichnungsspeicher 15 keinen ganzen Rahmen (Frame) aufgrund seiner begrenzten Speichertiefe erfassen kann. Aus den einzelnen Teilaufzeichnungen kann der gesamte Rahmen (Frame) lückenlos zusammengesetzt werden. Auch kann dieses Verfahren zur Anzeige eines Augendiagramms auf Symbolebene genutzt werden.

## Patentansprüche

1. Signalgenerator (1) mit
einer Basisbandeinheit (2), die ein digitales Basisbandsignal mit einer Inphase-Komponente und einer Quadraturphase-Komponent erzeugt,
einem I/Q-Modulator (5), der das digitale Basisbandsignal moduliert,
einem Aufzeichnungsspeicher (15), der einen Zeitabschnitt des digitalen Basisbandsignals aufzeichnet, und
eine optische Anzeigeeinrichtung (23), die das in dem Aufzeichnungsspeicher (15) gespeicherte digitale Basisbandsignal in einer vorgebbaren Darstellungsweise darstellt.

2. Signalgenerator nach Anspruch 1,
**dadurch gekennzeichnet,**
**daß** zwischen der Basisbandeinheit (2) und dem I/Q-Modulator (5) zumindest eine oder mehrere Signalveränderungseinheiten (3, 4) vorgesehen sind und daß das Signal am Eingang und/oder Ausgang jeder Signalveränderungseinheit (3, 4) dem Aufzeichnungsspeicher (15) zuführbar ist.

3. Signalgenerator nach Anspruch 2,
**dadurch gekennzeichnet,**
**daß** eine der Signalveränderungseinheiten (3, 4) eine Rauscheinheit (3) und/oder eine Fadingeinheit (4) und/oder eine Verzerrereinheit ist.

4. Signalgenerator nach einem der Ansprüche 1 bis 3,
**dadurch gekennzeichnet, daß** die Basisbandeinheit (2) zumindest einen Abtastratenumsetzer, Resampler, (10a, 10b) aufweist und das Signal am Eingang und/oder Ausgang jedes Abtastratenumsetzers (10a, 10b) dem Aufzeichnungsspeicher (15) zuführbar ist.

5. Signalgenerator nach einem der Ansprüche 1 bis 4,
**dadurch gekennzeichnet,**
**daß** die Basisbandeinheit (15) zumindest ein Impulsformungsfilter (9a, 9b) aufweist und das Signal am Eingang und/oder Ausgang jedes Impulsformungsfilters (9a, 9b) dem Aufzeichnungsspeicher (15) zuführbar ist.

6. Signalgenerator nach Anspruch 5,
**dadurch gekennzeichnet,**
**daß** auf der Anzeigeeinrichtung (23) Code Domain Power eines CDMA-Signals dargestellt wird und dem Aufzeichnungsspeicher (15) das Signal in einer Symboltaktrate (f_{sym}) vor dem Impulsformungsfilter (9a, 9b) zugeführt wird.

7. Signalgenerator nach einem der Ansprüche 1 bis 6,
**dadurch gekennzeichnet,**
**daß** vor dem Aufzeichnungsspeicher (15) eine oder mehrere Dezimierungseinheiten (18a) vorgesehen sind, die den Datenstrom des digitalen Basisbandsignals um einen Dezimierungsfaktor N dezimieren, indem nur jedes N-te Datenelement ausgewählt wird.

8. Signalgenerator nach Anspruch 7,
**dadurch gekennzeichnet,**
**daß** der Beginn des Zeitabschnitts, welchen der Aufzeichnungsspeicher (15) aufzeichnet, durch ein Triggersignal (TS) gesteuert ist.

9. Signalgenerator nach Anspruch 8,
**dadurch gekennzeichnet,**
**daß** das Triggersignal (TS) so gewählt ist, daß mehrere Zeitabschnitte lückenlos aneinander gefügt sind.

10. Signalgenerator nach Anspruch 8,
**dadurch gekennzeichnet,**
**daß** das Triggersignal (TS) so gewählt ist, daß die Zeitabschnitte jeweils periodische Abschnitte eines periodischen Basisbandsignals abdecken.

## Claims

1. Signal generator (1) with a baseband unit (2), which generates a digital baseband signal with an in-phase component and a quadrature-phase component,
comprising an I/Q modulator (5), which modulates the digital baseband signal,
with a recording memory (15), which records a time segment of the digital baseband signal, and a visual display device (23), which displays the digital baseband signal stored in the recording memory (15) using a predeterminable method of presentation.

2. Signal generator according to claim 1,
**characterised in that**
at least one or more signal-modifying units (3,4) are provided between the baseband unit (2) and the I/Q modulator (5), and that the signal at the input and/or output of each signal-modifying unit (3,4) can be supplied to the recording memory (15).

3. Signal generator according to claim 2,
**characterised in that**
one of the signal-modifying units (3,4) is a noise unit (3) and/or a fading unit (4) and/or a distortion unit.

4. Signal generator according to any one of claims 1 to 3,
**characterised in that**
the baseband unit (2) provides at least one sampling-rate converter, resampler, (10a, 10b), and that the signal at the input and/or output of each resampler (10a, 10b) can be supplied to the recording memory (15).

5. Signal generator according to any one of claims 1 to 4,
**characterised in that**
the baseband unit (15) provides at least one pulse-shaping filter (9a, 9b), and that the signal at the input and/or output of each pulse-shaping filter (9a, 9b) can be supplied to the recording memory (15).

6. Signal generator according to claim 5,
**characterised in that**
the code domain power of a CDMA signal is displayed on the display device (23), and that the signal is supplied to the recording memory (15) before the pulse-shaping filter (9a, 9b) with a symbol clock pulse rate (f_{sym}).

7. Signal generator according to any one of claims 1 to 6,
**characterised in that**
one or more decimation units (18a) are provided before the recording memory (15), which decimate the data stream of the digital baseband signal by a decimation factor N by selecting only every N^{th} data element.

8. Signal generator according to claim 7,
**characterised in that**
the start of the time segment recorded by the recording memory (15) is controlled by a trigger signal (TS).

9. Signal generator according to claim 8,
**characterised in that**
the trigger signal (TS) is selected in such a manner that several time segments are joined to one another without a gap.

10. Signal generator according to claim 8,
**characterised in that**
the trigger signal (TS) is selected in such a manner that the time segments each cover periodic segments of a periodic baseband signal.

## Revendications

1. Générateur de signaux (1) comprenant
une unité de bande de base (2), qui génère un signal numérique de bande de base avec une composante en phase et une composante de phase en quadrature,
un modulateur I/Q (5), qui module le signal numérique de bande de base,
une mémoire d'enregistrement (15), qui enregistre une tranche de temps du signal numérique de bande de base, et
un appareil d'affichage optique (23), qui représente le signal numérique de bande de base mémorisé dans la mémoire d'enregistrement (15) dans un mode de présentation prédéfinissable.

2. Générateur de signaux selon la revendication 1,
**caractérisé en ce que**
entre l'unité de bande de base (2) et le modulateur I/Q (5) sont prévues au moins une ou plusieurs unités de modification de signal (3, 4) et **en ce que** le signal peut être amené à la mémoire d'enregistrement (15) à l'entrée et/ou la sortie de chaque unité de modification de signal (3, 4).

3. Générateur de signaux selon la revendication 2,
**caractérisé en ce que**
l'une des unités de modification de signal (3, 4) est une unité de bruit (3) et/ou une unité d'évanouissement (4) et/ou une unité de distorsion.

4. Générateur de signaux selon l'une quelconque des revendications 1 à 3,
**caractérisé en ce que**
l'unité de bande de base (2) présente au moins un convertisseur du taux d'échantillonnage, Resampler, (10a, 10b) et le signal peut être amené à la mémoire d'enregistrement (15) à l'entrée et/ou la sortie de chaque convertisseur du taux d'échantillonnage (10a, 10b).

5. Générateur de signaux selon l'une quelconque des revendications 1 à 4,
**caractérisé en ce que**
l'unité de bande de base (15) présente au moins un filtre de conformation d'impulsions (9a, 9b) et le signal peut être amené à la mémoire d'enregistrement (15) à l'entrée et/ou la sortie de chaque filtre de conformation d'impulsions (9a, 9b).

6. Générateur de signaux selon la revendication 5,
**caractérisé en ce que**
le Code Domain Power d'un signal CDMA est présenté sur l'appareil d'affichage (23) et le signal peut être amené à la mémoire d'enregistrement (15) dans un taux de cadence de symbole (f_{sym}) avant le filtre de conformation d'impulsions (9a, 9b).

7. Générateur de signaux selon l'une quelconque des revendications 1 à 6,
**caractérisé en ce que**
il est prévu avant la mémoire d'enregistrement (15) une ou plusieurs unités de décimation (18a), qui déciment le flux de données du signal numérique de bande de base d'un facteur de décimation N en sélectionnant seulement chaque N-ième élément de données.

8. Générateur de signaux selon la revendication 7,
**caractérisé en ce que**
le début de la tranche de temps, que la mémoire d'enregistrement (15) enregistre, est commandé par un signal de déclenchement (TS).

9. Générateur de signaux selon la revendication 8,
**caractérisé en ce que**
le signal de déclenchement (TS) est choisi de telle sorte que plusieurs tranches de temps sont assemblées les unes au bout des autres sans vide.

10. Générateur de signaux selon la revendication 8,
**caractérisé en ce que**
le signal de déclenchement (TS) est choisi de telle sorte que les tranches de temps couvrent à chaque fois des tranches périodiques d'un signal périodique de bande de base.
